Europäisches Patentamt

European Patent Office

Office européen des brevets

(19)

(11) Veröffentlichungsnummer : **0 088 284**
**B1**

(12)　　　　　　　　**EUROPÄISCHE PATENTSCHRIFT**

(45) Veröffentlichungstag der Patentschrift :
28.05.86

(21) Anmeldenummer : 83101708.2

(22) Anmeldetag : 22.02.83

(51) Int. Cl.⁴ : **E 04 C 2/26, B 32 B 13/00**

(54) **Vorgefertigte Verbundbauplatte.**

(30) Priorität : 06.03.82 DEU 8206333

(43) Veröffentlichungstag der Anmeldung :
14.09.83 Patentblatt 83/37

(45) Bekanntmachung des Hinweises auf die Patenterteilung : 28.05.86 Patentblatt 86/22

(84) Benannte Vertragsstaaten :
AT BE CH DE FR GB IT LI LU NL

(56) Entgegenhaltungen :
EP-A- 0 015 613
CH-A- 465 821
GB-A- 1 194 382
NL-A- 6 401 391

(73) Patentinhaber : YTONG AG
Hornstrasse 3
D-8000 München 40 (DE)

(72) Erfinder : Kiefer, Johann
Pöttmes. Strasse 138
D-8859 Klingsmoos (DE)
Erfinder : Wurm, Horst
Bisch. Sailer-Strasse 32
D-8898 Schrobenhausen (DE)
Erfinder : Hums, Dieter
Ferd. Zink-Strasse 1
D-8898 Schrobenhausen (DE)

(74) Vertreter : Patentanwälte Dr. Solf & Zapf
Asamstrasse 8
D-8000 München 90 (DE)

EP 0 088 284 B1

Jouve, 18, rue St-Denis, 75001 Paris, France

**Beschreibung**

Die Erfindung bezieht sich auf eine vorgefertigte Verbundbauplatte, die eine etwa 2 bis 7,5 cm dicke ebenflächige Gas- oder Schaumbetonplatte oder dgl. mineralische hochporöse Bauplatte aufweist. Die Verbundplatte soll im wesentlichen zur Ausrüstung der Innen- und/oder Außenseite eines bestehenden Mauerwerks eines Gebäudes zur nachträglichen Wärme- und Schalldämmung dienen.

Bekannt ist, Außenwände durch Aufkleben von Schaumstoffplatten aus z. B. geschäumten Polystyrol zu verkleiden und diese Verkleidung mit einer durchgehenden, aus einem Klebemittel und einem Glasfasergespinst oder -gewebe bestehenden porenfreien Zwischenschicht zu bedecken, auf die eine witterungsbeständige Putzschicht aufgetragen wird (DE-A-13 03 680). Die Klebeschicht soll als Feuchtigkeitssperre dienen und witterungsbeständig sein. Sie soll ferner die Festigkeit und Elastizität der Schaumstoffplatte erhöhen, so · daß insbesondere das Gewicht dicker Außenputzschichten getragen werden kann. Die Bauausführung einer solchen Verkleidung ist jedoch schwierig ; zudem muß letztlich doch die Schaumstoffplatte aus Kunststoff das Gewicht der Putzschicht tragen, so daß insoweit enge Grenzen gesetzt sind in bezug auf die Festigkeit der Verkleidung.

Zudem ist aus der CH-A-392 834 eine Bauplatte für die Innen- und Außenverkleidung von Bauten bekannt, deren Kern aus Schaumglas, Schaumbeton oder Schaumkunststoff besteht, wobei dieser Kern mit einer Überzugsschicht hoher Witterungsbeständigkeit, Elastizität und Festigkeit festhaftend überzogen ist und die Überzugsschicht wiederum eine witterungsbeständige Deckschicht tragen soll. Die Überzugsschicht kann aus Glasfasergespinst oder -gewebe und die Deckschicht aus einer Putzschicht bestehen. Die Überzugsschicht wirkt porenschließend und kann auf dem Kern aufgeklebt sein. Eine solche Bauplatte mag zwar bezüglich der Festigkeit durch die Beschichtung verbessert worden sein, jedoch kann die Wärme- und Schalldämmung des Kerns dadurch nur verhältnismäßig gering erhöht werden.

Zur Verkleidung von Wänden sind auch schon relativ dünne Gasbetonbauplatten von 2 bis 7,5 cm Dicke entwickelt worden, die wegen ihrer geringen Eigenfestigkeit bei Verwendung als Bauplatte nicht ohne weiteres verwendbar sind und deshalb mit einer Glasfasermatte bewehrt sind, wobei die Glasfasermatte in die Mörtelschicht eingebettet ist und die Oberfläche der Gasbetonplatte kontaktiert (DE-A-28 54 228). Diese Platten haben sich festigkeitsmäßig bestens bewährt.

Verwirklicht wird derzeit eine Verkleidung von bestehendem Mauerwerk mit einer sogenannten « Thermohaut » ähnlich dem Gegenstand der bereits erwähnten DE-A-13 03 680. Diese Thermohaut besteht aus Polystyrol-Schaumplatten, die auf das Mauerwerk aufgeklebt werden. Auf die Platten wird ein Kleber und Glasseidengewebe aufgebracht. Anschließend wird auf diese Zwischenschicht eine dünne Putzschicht aufgetragen. Nachteilig ist, daß sich diese Thermohaut im Sommer stark zonal aufheizt, so daß Putzrisse aufgrund unterschiedlicher Wärmeausdehnungskoeffizienten auftreten. Die Festigkeit der Thermohaut ist außerdem gering. Ein weiterer wesentlicher Nachteil ist, daß bedingt durch die durchgehende Zwischen- und Putzschicht eine großflächige Platte geschaffen wird, die als Resonanzkörper wirkt und daher die Schalldämmung nicht verbessert.

Bekannt ist ferner eine « Thermohaut », die in der Folge von außen nach innen aus einem Struktur-Trockenputz, einem Armierungsmörtel mit einem Armierungsgewebe sowie einer Mineralfaserputzträgerplatte besteht. Für eine derartige Thermohaut können nur sehr schwere Mineralfaserplatten verwendet werden, um eine ausreichende Festigkeit der Thermohaut zu gewährleisten (Rohdichte etwa 150 kg/m³). Diese haben den Nachteil, zum einen sehr teuer zu sein und zum anderen eine relativ geringe Wärmedämmung und einen relativ geringen Schallschutz zu gewährleisten.

In der CH-A-465 821 ist eine Bauplatte beschrieben, die beiderseitig mit zement- oder kunststoffgebundenem, diffusionsfähigem Isolierstoff beschichtet ist. Der Plattenkern soll selbsttragend und beispielsweise durch ein oder zwei Faserdämmplatten gebildet sein.

Aus der NL-A-6 401 391 ist eine Gasbetonplatte bekannt, die auf einer Seite Rippen zur Erzielung ausreichender Festigkeit und auf der anderen Seite eine Isolationsschicht aufweist. Die Schicht aus Isolationsmaterial wird vor dem Gießen des Betons in der Form angeordnet. Das Isolationsmaterial kann auch nach dem Gießen des Betons, wenn dieser noch feucht ist, an der Betonplatte angebracht werden. Bei dem Isolationsmaterial kann es sich z. B. um Kork handeln.

Der Erfindung liegt die Aufgabe zugrunde, eine vorgefertigte Verbundbauplatte zu schaffen, die leicht ist, gute Schall- und Wärmedämmung gewährleistet, außerdem eine ausreichende Festigkeit für die bauliche Handhabung besitzt, sich dem zonalen Aufheizen bei Wärmeeinwirkung widersetzt und auf die problemlos eine Putzschicht aufgetragen werden kann.

Diese Aufgabe ist erfindungsgemäß bei einer Verbundbauplatte mit den Merkmalen des Anspruchs 1 gelöst.

Bei der erfindungsgemäßen Verbundbauplatte ist die Verbindung der leichten Mineralwolle möglich, weil die Mineralfaser in Verbund mit der relativ stabilen Gasbetonplatte verwendet wird. Die Rohdichte der Mineralwolle beträgt etwa 70 kg/m³. Als Kleber wird bevorzugt ein Dünnbettkleber oder ein Styrolbutadienlatex-Kleber verwendet.

Die neue vorgefertigte Verbundbauplatte vereint in hervorragender Weise die an sich bekannten Eigenschaften der Baustoffe, aus denen sie besteht. Hinzu kommt, daß sie sehr leicht ist und in überraschender Weise die aufgebrachte Dämmschicht wie eine Bewehrung wirkt, so daß die mehrschichtige Verbundbauplatte trotz der relativ dünnen zerbrechlichen Gas- oder Schaumbetonplatte sehr gute Festigkeiten für die bauliche Handhabung erhält. Die neue Verbundbauplatte ist schlag- und stoßfest und gewährleistet hohe Schall- und Wärmedämmung, wobei der empfindliche Wärmedämmstoff gegen hohe thermische Belastungen und Beschädigungen durch die mineralische poröse Bauplatte geschützt ist.

Die erfindungsgemäße Kombination der Baustoffe bedingt bei der neuen Verbundbauplatte einen überraschenden Effekt : Die bekannten Außenputze, speziell die sehr leichten Dämmputze, sind nicht völlig wasserdicht, vor allem sind sie teilweise schlagregendurchlässig. Durchdringendes Wasser kann dann eine Mineralfaserisolierung der bekannten Thermohaut durchnässen und zerstören oder sich vor einer Schaumpolystyrolisolierung stauen und zu einer Ablösung des Putzes führen. Setzt man anstelle einer Thermohaut die neue Verbundbauplatte ein, so daß zwischen dem Isolierstoff und dem Außenputz die YTONG-R-Platte als Schicht liegt, so wirkt diese offenbar als Pufferspeicher für durchdringendes Wasser. Die Gasbetonplatte — die normalerweise als Fassadenplatte ungeschützt nicht geeignet ist — wirkt hier wegen ihres kapillaren Wasserrücksaugevermögens wasserverteilend. Dringt durch lokale Beschädigung, Risse oder dgl. Wasser durch den Putz, wird es schnell in der Gasbetonplatte verteilt ; das Wasser kann sich somit nicht lokal stauen und zu den genannten Schäden führen. Bei einer nachfolgenden Trocknungsperiode wird das Wasser wieder aus der Gasbetonplatte auswandern und durch den Putz nach außen verdampfen.

Zur Verkleidung eines bestehenden Mauerwerks werden die neuen Verbundbauplatten dämmschichtseitig auf das Mauerwerk geklebt und in an sich bekannter Weise zusätzlich mit Dübeln am Mauerwerk gehalten. Sie können aber auch mit entsprechenden Ankern auf Abstand vor dem Mauerwerk, also mit einer Luftschicht, angeordnet werden. Die Verkleidung kann dann mit üblichen Putzen, die auf die Gas- oder Schaumbetonplatte in üblicher Weise aufgebracht werden, verputzt werden.

Besonders vorteilhaft ist, daß die neue Verbundbauplatte nur unbrennbare Baustoffe enthält und ein handliches, leichtes, werksseitig hergestelltes, stoß- und schlagfestes Einzelelement ist. Die Dicke der Gas- oder Schaumbetonplatte ist so gewählt, daß selbst bei starker Einwirkung der Sonnenstrahlung kein Wärmestau entsteht, so daß eine unerwünschte Aufheizung der Fassade vermieden wird. Dabei wird der eigentliche Wärmedämmstoff vor starker Erwärmung geschützt. Die neue Verbundbauplatte wird durch Dübel sicher gehalten, selbst wenn kein Kleber zum Aufkleben auf das Mauerwerk verwendet wird. Das Abschlagen oder Abwaschen von alten Putzen vom zu verkleidenden Mauerwerk entfallen. Die Außenplatte, bestehend aus Gas- oder Schaumbeton, kann mit einfachen Werkzeugen gerillt oder geschlitzt werden, so daß bei Verwendung als Innenverkleidung Elektro- und Wasserinstallationen verlegt werden können.

Vorzugsweise besitzt die neue Verbundbauplatte folgende Abmessungen und Eigenschaften :

Länge : 50 bis 62,5 cm
Breite : 25 cm
Dicke : 8,5 cm (Dämmstoffschicht 5 cm, Gasbetonplatte 3,5 cm)
Gewicht (trocken) : 28 kg pro m$^2$
Wärmeleitfähigkeit : 0,061 W/mK

Wird beispielsweise eine 30 cm dicke Ziegelwand mit einer Rohdichte von 1 400 kg pro dm$^3$ mit den neuen Verbundbauplatten verkleidet, so ergibt sich die folgende Verbesserung in bezug auf die Wärme- und Schalldämmung.

Wärmedämmung

Ziegelwand   K = 1,49 W/m$^2$ K
Ziegelwand + aufgeklebter Bauplatte
K = 0,48 W/m$^2$ K

Schalldämmung

Ziegelwand   $R'_w$ w = + 4-5 dB
Ziegelwand + aufgeklebter Bauplatte
$R'_w$ w = 54 dB

Die bevorzugte Verarbeitung der neuen Verbundbauplatte erfolgt, indem die Verbundbauplatten am Untergrund mit Baukleber verklebt werden. Zusätzlich werden Lager- und Stoßfugen der Platten mit Baukleber verschlossen. Die Platten werden, nachdem mehrere Schichten angeklebt worden sind, mechanisch mit Dübeln verankert. Hierzu werden Upatt-Spreizdübel IPS 10/100-120, 4 Stück pro m$^2$ benötigt. Im Sockelbereich werden die Verbundbauplatten durch ein Winkelprofil mit 8,5 cm Schenkellänge und 1 cm Dicke abgestützt. Anschließend wird wie üblich verputzt.

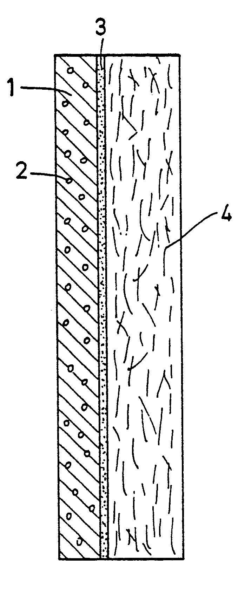

Die Zeichnung verdeutlicht die Erfindung beispielhaft. Sie stellt einen Querschnitt durch die neue Verbundbauplatte dar. Die Trägerplatte 1, bestehend aus Gas- oder Schaumbeton, ist porös und weist

3

Kugelporen 2 sowie nicht dargestellte Mikroporen auf. Auf eine ihrer beiden Hauptflächen ist ein Kleber 3 aufgetragen, der eine Mineralfaserplatte 4 mit der Trägerplatte 1 verbindet. Anstelle der Mineralfaserplatte kann auch eine Styroporplatte verwendet werden.

## Patentansprüche

1. Vorgefertigte Verbundbauplatte, die eine etwa 2 bis 7,5 cm dicke ebenflächige Gas- oder Schaumbetonplatte oder dgl. mineralische hochporöse Bauplatte aufweist, dadurch gekennzeichnet, daß auf einer der beiden Hauptflächen der Gas- oder Schaumbetonplatte oder dgl. eine wärme- und schalldämmende Schicht aus Kunststoffschaum, vorzugsweise aus einer Kunststoffschaumplatte, z. B. einer porösen Polystyrol-Platte, oder aus einer Mineralfaserplatte, insbesondere aus Mineralwolle, niedriger Rohdichte aufgebracht, vorzugsweise aufgeklebt ist, wobei die wärme- und schalldämmende Schicht eine Dicke von vorzugsweise 5 bis 10 cm aufweist.

2. Vorgefertigte Verbundbauplatte nach Anspruch 1, dadurch gekennzeichnet, daß die wärme- und schalldämmende Schicht mit einem Dünnbettkleber oder einem Styrolbutadienlatexkleber aufgeklebt ist.

## Claims

1. Prefabricated composite building slab which has an approximately 2 to 7.5 cm thick plane surface gas-concrete or aerated-concrete slab or like highly porous mineral building slab, characterised in that a heat-insulating and sound-proofing layer of plastic foam, preferably consisting of a plastic-foam sheet, for example a porous polystyrene sheet, or of a mineral-fibre sheet, consisting especially of mineral wool, of low bulk density is applied, preferably glued, to one of the two main surfaces of the gas-concrete or aerated-concrete slab or the like, the heat-insulating and sound-proofing layer having a thickness of preferably 5 to 10 cm.

2. Prefabricated composite building slab according to Claim 1, characterised in that the heat-insulating and sound-proofing layer is glued on by means of a thin-bed adhesive or a styrene-butadiene Latex adhesive.

## Revendications

1. Plaque de construction composée préfabriquée comportant une plaque de béton-gaz ou de béton-mousse ou une plaque de construction minérale de grande porosité similaire, de surface plane et d'une épaisseur de 2 à 7,5 cm, caractérisée en ce que sur l'une des deux surfaces principales de la plaque de béton-gaz ou de béton-mousse ou équivalente est étendue, avantageusement collée, une couche d'isolation thermique et acoustique faite d'une mousse synthétique, avantageusement d'une plaque de mousse synthétique, par exemple une plaque de polystyrol poreuse ou d'une plaque de fibres minérales, en particulier de laine minérale, la couche d'isolation thermique et acoustique ayant avantageusement une épaisseur de 5 à 10 cm.

2. Plaque de construction composée préfabriquée selon la revendication 1, caractérisée en ce que la plaque d'isolation thermique et acoustique est collée avec une colle en couche mince ou avec une colle de latex-butadiène-styrol.